# EUROPÄISCHE PATENTSCHRIFT

(11) **EP 2 836 734 B1**
(45) Veröffentlichungstag und Bekanntmachung des Hinweises auf die Patenterteilung: **16.03.2016**
(21) Anmeldenummer: 13712528.2
(22) Anmeldetag: 22.03.2013
(51) Int. Cl.: F16D 48/06

(54) **VERFAHREN ZUM BETRIEB EINER BETÄTIGUNGSVORRICHTUNG FÜR EINE KUPPLUNG**
METHOD FOR OPERATING AN ACTUATION DEVICE FOR A CLUTCH
PROCÉDÉ PERMETTANT DE FAIRE FONCTIONNER UN DISPOSITIF D'ACTIONNEMENT POUR UN EMBRAYAGE

(30) Priorität: 10.04.2012 DE 102012205819
(43) Veröffentlichungstag der Anmeldung: 18.02.2015
(73) Patentinhaber: Schaeffler Technologies AG & Co. KG, 91074 Herzogenaurach (DE)
(72) Erfinder: HOLZER, Lukas, 66119 Saarbrücken (DE); JÖRGER, Manuela, 77815 Bühl (DE)
(86) Internationale Anmeldenummer: PCT/EP2013/056054
(87) Internationale Veröffentlichungsnummer: WO 2013/152941

(56) Entgegenhaltungen:
- EP-A2- 1 832 775
- DE-A1-102007 029 934
- DE-A1-102011 052 966
- FR-A1- 2 826 081

## Beschreibung

Die vorliegende Erfindung betrifft ein Verfahren zum Betrieb einer Betätigungsvorrichtung für eine Kupplung, insbesondere für eine Kraftfahrzeugkupplung.

Aus den Dokumenten FR 2 826 081 A1 sowie EP 1 832 775 A2 sind Verfahren zum Betrieb einer Betätigungsvorrichtung für eine Kupplung mit einer Statorvorrichtung, sowie einer Rotoreinrichtung, sowie einer bezüglich der Rotoreinrichtung in axialer Richtung begrenzt verlagerbaren Schlitteneinrichtung bekannt.

Aus der älteren, aber nicht vorveröffentlichten DE 10 2011 102 222.1 ist eine Betätigungsvorrichtung für eine Kupplung mit einer Statoreinrichtung, einer bezüglich der Statoreinrichtung verdrehbaren Rotoreinrichtung und einer bezüglich der Rotoreinrichtung in axialer Richtung begrenzt verlagerbaren Schlitteneinrichtung bekannt. Zwischen der Rotoreinrichtung und der Schlitteneinrichtung ist ein Wälzkörpergewindetrieb mit einer Mehrzahl von Windungen und einem Wälzkörperumlauf mit Wälzkörpern vorgesehen. Der Wälzkörperumlauf weist einen derart ausgebildeten Spurwechselbereich auf, dass Wälzkörper in Umfangsrichtung vor dem Spurwechselbereich zwischen einer ersten und einer zweiten Windung laufen, und Wälzkörper in Umfangsrichtung nach dem Spurwechselbereich zwischen der zweiten und einer dritten Windung laufen.

Es ist Aufgabe der vorliegenden Erfindung, ein Verfahren zum Betrieb einer Betätigungsvorrichtung für eine Kupplung anzugeben, um eine zuverlässige Drehmomentübertragung der Kupplung zu ermöglichen.

Erfindungsgemäß gelöst wird diese Aufgabe durch ein Verfahren zum Betrieb einer Betätigungsvorrichtung für eine Kupplung gemäß Patentanspruch 1 mit einer Statoreinrichtung, einer bezüglich der Statoreinrichtung verdrehbaren Rotoreinrichtung und einer bezüglich der Rotoreinrichtung in axialer Richtung begrenzt verlagerbaren Schlitteneinrichtung mit einem Ausrücklager, das mit einem Hebelelement der Kupplung in Anlage bringbar ist, wobei ein Vorlastpunkt derart festgelegt wird, dass das Ausrücklager der Schlitteneinrichtung bei Drehung der Kupplung eine minimale Anpresskraft auf das Hebelelement der Kupplung ausübt, und wobei die Statoreinrichtung zur Verlagerung der Schlitteneinrichtung derart bestromt wird, dass der Vorlastpunkt bei Drehung der Kupplung nicht unterschritten wird.

In diesem Zusammenhang sei darauf hingewiesen, dass ein Unterschreiten des Vorlastpunkts durch die Schlitteneinrichtung dann vorliegt, wenn die Anpresskraft, die das Ausrücklager auf das Hebelelement der Kupplung ausübt, auf ein unzulässiges Niveau, insbesondere auf 0 Newton, absinkt. Je nach Aufbau der Betätigungsvorrichtung kann ein Unterschreiten des Vorlastpunkts bei einer Bewegung der Schlitteneinrichtung auf die Kupplung zu oder von der Kupplung weg erfolgen.

Bevorzugte Ausführungsbeispiele der vorliegenden Erfindung sind in den abhängigen Ansprüchen dargelegt.

Insbesondere weist die Betätigungsvorrichtung einen Wälzkörpergewindetrieb, der zwischen der Rotoreinrichtung und der Schlitteneinrichtung angeordnet ist, mit zumindest drei Windungen und einem Wälzkörperumlauf mit Wälzkörpern auf, wobei der Wälzkörperumlauf einen derart ausgebildeten Spurwechselbereich aufweist, dass Wälzkörper in Umfangsrichtung vor dem Spurwechselbereich zwischen einer ersten und einer zweiten Windung laufen, und Wälzkörper in Umfangsrichtung U nach dem Spurwechselbereich zwischen der zweiten und einer dritten Windung laufen.

Insbesondere ist die Betätigungsvorrichtung für die Kupplung eines Kraftfahrzeugs ausgebildet. Bei der Kupplung handelt es sich insbesondere um eine Reibungskupplung, wie sie zwischen dem Verbrennungsmotor und dem Getriebe eines Kraftfahrzeugs für den Gangwechsel vorgesehen ist. Die Kupplung kann einerseits als Einzelkupplung ausgebildet sein, kann jedoch auch als Mehrfachkupplung, insbesondere als Doppelkupplung, ausgebildet sein. Bei einer Doppelkupplung sind vorzugsweise zwei Betätigungsvorrichtungen der vorgenannten Art vorzusehen. In einem besonders bevorzugten Ausführungsbeispiel sind die Betätigungsvorrichtung und die Kupplung Teil eines Hybridmoduls für ein Kraftfahrzeug.

Ferner kann die Kupplung sowohl als Trockenkupplung, als auch als Nasskupplung ausgebildet sein. Bei der Kupplung kann es sich einerseits um eine im betätigungsfreien Zustand eingerückte, das heißt normal-eingerückte Kupplung, oder andererseits um eine im betätigungsfreien Zustand ausgerückte, das heißt normal-ausgerückte Kupplung handeln. Bei einer normal-eingerückten Kupplung ist das Hebelelement, auf das die Betätigungsvorrichtung wirkt, üblicherweise als Tellerfeder ausgebildet, während bei einer normal-ausgerückten Kupplung das Hebelelement, auf das die Betätigungsvorrichtung wirkt, üblicherweise als Hebelfeder ausgebildet ist. Ferner kann die Kupplung einerseits als gedrückte Kupplung, das heißt als Kupplung, bei der die Betätigungsvorrichtung eine drückende Kraft auf das Hebelelement ausübt, oder andererseits als gezogene Kupplung, das heißt als Kupplung, bei der die Betätigungsvorrichtung eine ziehende Kraft auf das Hebelelement ausübt, ausgebildet sein.

Vorzugsweise bilden die Statoreinrichtung und die bezüglich der Statoreinrichtung verdrehbare Rotoreinrichtung einen Elektromotor. Der Elektromotor ist vorzugsweise als Drehstrommotor ausgebildet, bei dem Magnete, genauer gesagt Permanentmagnete, rotorseitig und wechselweise bestrombare Windungen statorseitig vorgesehen sind. Gemäß einem bevorzugten Ausführungsbeispiel ist der Elektromotor als Außenläufer ausgebildet, das heißt weist in seinem Inneren die Statoreinrichtung auf, die von der ringförmigen, drehbaren Rotoreinrichtung umgeben ist. Jedoch kann der Elektromotor auch als Innenläufer ausgebildet sein.

Die Betätigungsvorrichtung ist über eine Stromzufuhr bestrombar und vorzugsweise derart im Antriebsstrang des Kraftfahrzeugs gelagert, dass sie ausschließlich zum Einrücken und Ausrücken der Kupplung bestromt werden muss. Durch den Wälzkörpergewindetrieb, der im Wirkpfad zwischen der Rotoreinrichtung und der Schlitteneinrichtung angeordnet ist, wird eine rotatorische Bewegung der Rotoreinrichtung in eine translatorische Bewegung der Schlitteneinrichtung umgesetzt. Der Wälzkörpergewindetrieb ist vorzugsweise selbsthemmend ausgebildet. Über ein Ausrücklager, das beispielsweise als Schrägkugellager ausgebildet ist, aber auch als Kegelrollenlager, Nadellager oder Gleitlager ausgebildet sein kann, kann die Schlitteneinrichtung unmittelbar oder mittelbar auf das Hebelelement der Kupplung wirken.

Beispielsweise kann die Statoreinrichtung drehfest mit einem Trägerabschnitt, insbesondere mit einem Gehäuseträger, ausgebildet sein, so dass die Stromzufuhr der Statoreinrichtung mittels Kabel und ohne Drehdurchführung oder induktive Kopplung möglich ist. In radialer Richtung innerhalb der Statoreinrichtung verläuft die Eingangswelle der Kupplung bzw. die Abtriebswelle des Verbrennungsmotors. Die Eingangswelle ist bezüglich der Statoreinrichtung bzw. des Trägerabschnitts drehbar gelagert.

Jedoch ist es auch möglich, dass die Statoreinrichtung drehfest auf der Eingangswelle der Kupplung angeordnet ist, das heißt sich mit der Drehzahl des Verbrennungsmotors dreht. In diesem Fall ist eine Drehdurchführung oder eine induktive Kopplung zur Bestromung der Betätigungsvorrichtung erforderlich. Die Bestromung der Betätigungsvorrichtung in eine Richtung erzeugt im Vergleich zur Eingangsdrehzahl des Antriebsstrangs eine erhöhte Drehzahl der Rotoreinrichtung, wodurch die Kupplung ausgerückt wird. Die Bestromung der Betätigungsvorrichtung in die andere Richtung erzeugt eine im Vergleich zur Eingangsdrehzahl des Antriebsstrangs verringerte Drehzahl der Rotoreinrichtung, wodurch die Kupplung eingerückt wird. Daher kann der Ausrückvorgang der Kupplung über eine Beschleunigung der Rotoreinrichtung eingeleitet werden, während der Einrückvorgang der Kupplung über ein Abbremsen der Rotoreinrichtung eingeleitet wird. Ebenso ist es auch möglich, dass der Ausrückvorgang der Kupplung durch ein Abbremsen der Rotoreinrichtung eingeleitet wird, während der Einrückvorgang der Kupplung durch ein Beschleunigen der Rotoreinrichtung eingeleitet wird.

Gemäß einem bevorzugten Ausführungsbeispiel weist der Wälzkörpergewindetrieb eine Außenhülse auf, in die eine Formfeder eingesetzt ist, die eine Mehrzahl von Windungen aufweist. Die Formfeder ist insbesondere aus einem schraubenförmig gewundenen Federdraht ausgebildet, wobei in einer bevorzugten Ausgestaltung der gewundene Federdraht konturiert ist, das heißt, in axialer Richtung auf beiden Seiten mit einer Anlagekontur versehen ist, die durch einen dazwischen liegenden Kamm getrennt ist. Die benachbarten Anlagekonturen zweier aufeinander folgender Windungen der Formfeder bilden einen Teil der Oberflächengeometrie des Wälzkörpers ab, so dass der jeweilige Wälzkörper in axialer Richtung in einer in Umfangsrichtung verlaufenden Spur zwischen zwei benachbarten Windungen der Formfeder geführt werden kann.

Die Außenhülse ist zur Lagerung der Formfeder mittels eines Deckels abgeschlossen, der mit der Außenhülse durch mehrere in Umfangsrichtung verteilt angeordnete Schrauben verschraubt ist. Zwischen dem Deckel und der Außenhülse ist vorzugsweise eine Ausgleichsscheibe vorgesehen. Ausgleichsscheiben gibt es in unterschiedlicher Stärke, um im Betrieb der Betätigungsvorrichtung einerseits die weitestgehende Spielfreiheit des Wälzkörpergewindetriebs in axialer Richtung und andererseits die Leichtgängigkeit und insbesondere die Klemmfreiheit des Wälzkörpergewindetriebs sicherzustellen. Mittels der passenden Ausgleichsscheibe ist daher beim Zusammenbau der Betätigungsvorrichtung die axiale Länge des Raums, in dem die schraubenförmige Formfeder angeordnet ist, exakt einzustellen.

Gemäß einem bevorzugten Ausführungsbeispiel ist eine erste Kippmomentabstützeinrichtung im Bereich eines ersten Endes der Schlitteneinrichtung angeordnet. Eine zweite Kippmomentabstützeinrichtung ist im Bereich eines zweiten, dem ersten Ende in axialer Richtung gegenüberliegenden Endes der Schlitteneinrichtung, angeordnet. Auf diese Art und Weise ist es möglich, bei Betrachtung der Betätigungsvorrichtung von der Seite ein auf die Schlitteneinrichtung wirkendes Kippmoment sowohl im Uhrzeigersinn, als auch gegen den Uhrzeigersinn abzustützen.

Es ist von Vorteil, wenn zwei in axialer Richtung gegenüberliegende Kippmomentabstützeinrichtungen einen Fettraum begrenzen, in dem der Wälzkörperumlauf, und vorzugsweise die Formfeder, die zumindest die erste, zweite und dritte Windung aufweist, angeordnet ist/sind. Hierbei ist es von Vorteil, wenn die Kippmomentabstützeinrichtungen gleichzeitig die Funktion von Dichtungen übernehmen, von denen die eine außenhülsenseitig und die andere deckelseitig vorgesehen ist. Der Raum zwischen den beiden Dichtungen ist vorzugsweise mit Fett gefüllt, um die Reibung des Wälzkörpergewindetriebs zu minimieren und ein Verklemmen der Wälzkörper zu verhindern. Vorzugsweise weist die Kippmomentabstützeinrichtung zumindest einen Ring und zumindest eine Innenhülse auf. Der Ring befindet sich in gleitbeweglicher oder rollbeweglicher Anlage mit der Innenhülse. Insbesondere ist es von Vorteil, wenn beide Kippmomentabstützeinrichtungen jeweils einen Ring und jeweils eine Innenhülse aufweisen.

Es ist von Vorteil, wenn der Ring mittelbar oder unmittelbar an der Schlitteneinrichtung befestigt ist, und wenn die Innenhülse mittelbar oder unmittelbar an der Statoreinrichtung befestigt ist. Hierbei ist es von Vorteil, wenn der Ring und die Innenhülse keine Verdrehung zueinander erfahren, da auch die Schlitteneinrichtung und die Statoreinrichtung in vorteilhafter Weise im Betrieb der Betätigungsvorrichtung keine Verdrehung zueinander erfahren und insbesondere drehfest zueinander ausgebildet sind. Vorzugsweise ist der Ring an der Außenhülse oder am Deckel der Schlitteneinrichtung befestigt. Insbesondere ist es von Vorteil, wenn der Ring in die Außenhülse oder den Deckel der Schlitteneinrichtung eingepresst ist.

Gemäß einem weiteren bevorzugten Ausführungsbeispiel weist die Innenhülse einen geringeren Durchmesser als die Außenhülse der Schlitteneinrichtung auf. Vorzugsweise erstreckt sich die Innenhülse in axialer Richtung zumindest teilweise innerhalb der Außenhülse der Schlitteneinrichtung. Insbesondere ist es von Vorteil, wenn sich beide Innenhülsen in axialer Richtung zumindest teilweise innerhalb der Außenhülse der Schlitteneinrichtung erstrecken.

Gemäß einem weiteren bevorzugten Ausführungsbeispiel weist der Ring einen blockförmigen Querschnitt auf. Vorzugsweise ist der Ring aus einem starren und/oder druckstabilen Material ausgebildet. Es ist von Vorteil, wenn der Ring aus einem Kunststoff oder einem Sinterwerkstoff ausgebildet ist. Insbesondere ist es von Vorteil, wenn als Kunststoff Polytetrafluorethylen (PTFE) zum Einsatz kommt. Falls der Ring aus einem Sinterwerkstoff ausgebildet ist, ist es insbesondere von Vorteil, wenn im gesinterten Ring ein Schmierstoff eingelagert ist. Gemäß einem weiteren bevorzugten Ausführungsbeispiel weist der Ring eine Beschichtung mit reibungsverminderten Eigenschaften, vorzugsweise aus Polytetrafluorethylen (PTFE), auf.

Gemäß einem weiteren bevorzugten Ausführungsbeispiel weist der Ring ein Wälzlager auf. Dieses Wälzlager erlaubt in vorteilhafter Weise nur eine Verlagerung des Rings zur Innenhülse in axialer Richtung, da im Betrieb der Betätigungsvorrichtung der Ring und die Innenhülse in vorteilhafter Weise keine Verdrehung zueinander erfahren, da auch insbesondere im Betrieb der Betätigungsvorrichtung die Schlitteneinrichtung und die Statoreinrichtung in vorteilhafter Weise keine Verdrehung zueinander erfahren. Vorzugsweise sind die Schlitteneinrichtung und die Statoreinrichtung drehfest zueinander ausgebildet.

Der mit Wälzkörpern gefüllte Wälzkörperumlauf des Wälzkörpergewindetriebs ist vorzugsweise einteilig mit der Rotoreinrichtung, genauer gesagt einteilig mit einem Joch der Rotoreinrichtung, ausgebildet. Das Joch der Rotoreinrichtung ist drehbar über ein Stützlager, insbesondere ein Radiallager, mittelbar oder unmittelbar an der Statoreinrichtung abgestützt.

Zusätzlich zum Spurwechselbereich weist der Wälzkörperumlauf zumindest einen Tragbereich auf, der in Umfangsrichtung vor dem Spurwechselbereich und nach dem Spurwechselbereich angeordnet ist. Im Spurwechselbereich werden im Betrieb der Betätigungsvorrichtung, das heißt bei Drehung der Rotoreinrichtung, die umlaufenden Wälzkörper von einer Spur der Formfeder in eine benachbarte Spur der Formfeder verlagert. Genauer gesagt sind die Wälzkörper in Umfangsrichtung vor dem Spurwechselbereich im Tragbereich in der Spur zwischen einer ersten und einer zweiten Windung der Formfeder angeordnet, während die Wälzkörper in Umfangsrichtung nach dem Spurwechselbereich im Tragbereich in der Spur zwischen der zweiten und einer dritten Windung der Formfeder angeordnet sind.

Der Tragbereich des Wälzkörperumlaufs ist im Wesentlichen schraubengewindeförmig ausgebildet. Die Steigung des schraubengewindeförmigen Tragbereichs entspricht der Spur zwischen der ersten und zweiten Windung der Formfeder, in der die Wälzkörper laufen. Gleichermaßen entspricht die Steigung des schraubengewindeförmigen Tragbereichs der Spur zwischen der zweiten und dritten Windung der Formfeder, in der die Wälzkörper laufen.

In einem bevorzugten Ausführungsbeispiel ist bei einem als Außenläufer ausgebildeten Elektromotor der Wälzkörperumlauf im Außenumfang der Rotoreinrichtung angeordnet, während dementsprechend die Formfeder, zwischen deren Windungen die Wälzkörper laufen, radial außerhalb angeordnet und als innenkonturierte Formfeder ausgebildet ist, wobei sowohl der Kamm als auch die Anlagekonturen für die Wälzkörper in radialer Richtung nach innen weisen. Jedoch ist es auch möglich, beispielsweise bei der Ausbildung des Elektromotors als Innenläufer, den Wälzkörperumlauf im Innenumfang einer Rotoreinrichtung vorzusehen, und dementsprechend die Formfeder radial innerhalb anzuordnen und als außenkonturierte Formfeder auszubilden.

Gemäß einem weiteren bevorzugten Ausführungsbeispiel geht ein Ende des Tragbereichs über einen Einlaufabschnitt in den Spurwechselbereich über. Der Spurwechselbereich geht über einen Auslaufabschnitt in einen Anfang des Tragbereichs über. Es ist von Vorteil, wenn sich im Einlaufabschnitt eine Tiefe des Wälzkörperumlaufs in radialer Richtung vom Tragbereich zum Spurwechselbereich kontinuierlich vergrößert. Im Auslaufabschnitt verringert sich eine Tiefe des Wälzkörperumlaufs in radialer Richtung vom Spurwechselbereich zum Tragbereich kontinuierlich. Hierdurch wird eine gleichmäßige Zuführung der Wälzkörper zum und Abführung der Wälzkörper vom Spurwechselbereich ermöglicht.

Insbesondere ist es von Vorteil, wenn die Wälzkörper als Kugeln ausgebildet sind. Weiterhin ist es dabei von Vorteil, wenn der Wälzkörperumlauf als umlaufende Kugelrinne ausgebildet ist. Im Tragbereich ist die Kugelrinne vorzugsweise im Wesentlichen U-förmig ausgebildet, wobei die Kugeln im Wesentlichen mit der Hälfte ihres Durchmessers in radialer Richtung der Betätigungsvorrichtung in die Kugelrinne eintauchen.

Weiterhin ist es von Vorteil, wenn die Tiefe des Spurwechselbereichs im Wesentlichen gleich dem, vorzugsweise größer als der Durchmesser der Kugeln ist. Dies bedeutet, dass im Spurwechselbereich die Kugeln in radialer Richtung der Betätigungsvorrichtung zumindest nahezu vollständig in die Kugelrinne eintauchen können. Die Eintauchtiefe muss mindestens so groß sein, dass die Kugeln von der zwischen der in axialer Richtung der Betätigungsvorrichtung zwischen der ersten und zweiten Windung angeordneten Spur zu der in axialer Richtung zwischen der zweiten und dritten Windung angeordneten Spur wechseln können, ohne dabei die zweite Windung, insbesondere den Kamm der Formfedern im Bereich der zweiten Windung, zu berühren. Vorzugsweise ist der Durchmesser der Kugeln kleiner als die Tiefe des Spurwechselbereichs.

Im Betrieb der Betätigungsvorrichtung ist es von Vorteil, wenn zur Bestimmung des Vorlastpunkts die Statoreinrichtung derart bestromt wird, dass die Schlitteneinrichtung in einem Bereich, in dem der Vorlastpunkt vermutet wird, in axialer Richtung verlagert wird, und die Stromaufnahme der Statoreinrichtung und/oder die Drehzahl der Rotoreinrichtung und/oder die Geschwindigkeit der Schlitteneinrichtung in diesem Bereich überwacht wird.

Weiterhin ist es von Vorteil, wenn der Vorlastpunkt in einen Bereich eines globalen Minimums der Stromaufnahme und/oder eines globalen Maximums der Drehzahl und/oder eines globalen Maximums der Geschwindigkeit festgelegt wird.

Gemäß einer weiteren vorteilhaften Ausbildung des Verfahrens wird der Vorlastpunkt mit einem vorgegebenen Abstand zu einem Bereich des betragsmäßig größten Anstiegs der Stromaufnahme und/oder des betragsmäßig größten Anstiegs der Drehzahl und/oder des betragsmäßig größten Anstiegs der Geschwindigkeit festgelegt.

Vorzugsweise wird der Anstieg der Stromaufnahme und/oder der Drehzahl und/oder der Geschwindigkeit über den Weg, den die Schlitteneinrichtung in axialer Richtung zurücklegt, bestimmt.

Weiterhin vorzugsweise wird der Vorlastpunkt während des Betriebs der Betätigungsvorrichtung mehrmals bestimmt.

Dabei ist es von Vorteil, wenn ein neuer Vorlastpunkt von einem zuvor bestimmten Vorlastpunkt nur eine fest eingestellte Maximalstrecke entfernt sein darf, und andernfalls als unzulässig verworfen wird.

Vorzugsweise wird der Vorlastpunkt zur Anpassung einer Drehmoment-Weg-Kennlinie der Betätigungsvorrichtung und/oder der Kupplung genutzt.

Die vorliegende Erfindung wird nachfolgend anhand von bevorzugten Ausführungsbeispielen in Verbindung mit den zugehörigen Figuren näher erläutert. In diesen zeigen:
- Figur 1: ein Ausführungsbeispiel einer Betätigungsvorrichtung für eine Kupplung in einer Schnittansicht,
- Figur 2: einen Wälzkörpergewindetrieb der Betätigungsvorrichtung aus Figur 1 in einer Seitenansicht,
- Figur 3: eine Detailansicht eines Wälzkörperumlaufs der Betätigungsvorrichtung aus Figur 1 in einem Tragbereich,
- Figur 4: Diagramme, die die Stromaufnahme der Betätigungsvorrichtung (oben) und die Drehzahl einer Rotoreinrichtung der Betätigungsvorrichtung (unten) über den Betätigungsweg zeigen, und
- Figur 5: Diagramme, die den Betätigungsweg (oben), die Stromaufnahme der Betätigungsvorrichtung bei konstanter Spannung (Mitte) und die Steigung der Stromaufnahme (unten) über die Zeit einer Betätigung der Kupplung zeigen.

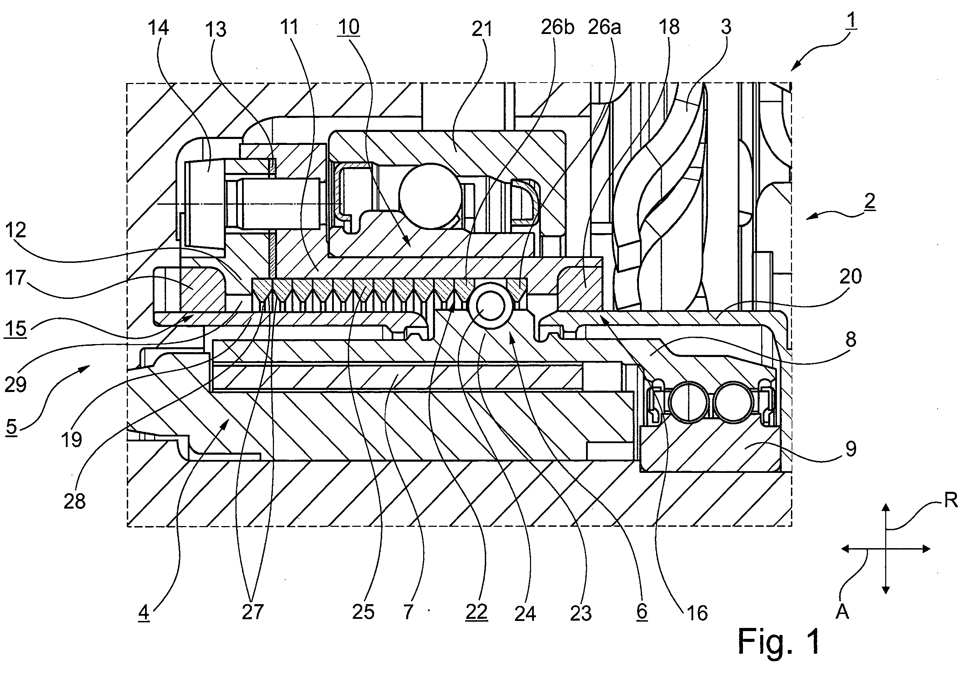

Die Figuren 1 bis 5 betreffen ein bevorzugtes Ausführungsbeispiel einer Betätigungsvorrichtung 1 für eine Kupplung 2, insbesondere für einen Antriebsstrang eines Kraftfahrzeugs. Merkmale, die in der vorliegenden Beschreibung nicht als erfindungswesentlich gekennzeichnet sind, sind als optional zu verstehen. Daher betrifft die nachfolgende Beschreibung auch weitere Ausführungsbeispiele der Betätigungsvorrichtung 1, die Teilkombinationen der im Folgenden zu erläuternden Merkmale aufweisen. Ebenso betrifft die nachfolgende Beschreibung die Kombination bzw. den Zusammenbau der Betätigungsvorrichtung 1 mit der Kupplung 2, insbesondere im Antriebsstrang eines Kraftfahrzeugs.

Die Kupplung 2 ist drehbar um eine Drehachse Z gelagert und weist zumindest eine nicht dargestellte Anpressplatte, zumindest eine nicht dargestellte Gegendruckplatte und zumindest eine in axialer Richtung A der Kupplung 2 zwischen der Anpressplatte und der Gegendruckplatte angeordnete, nicht dargestellte Kupplungsscheibe auf. Die Gegendruckplatte ist mit einem Gehäusebauteil der Kupplung 2, insbesondere einem Kupplungsdeckel, fest verbunden, insbesondere verschraubt. Die Anpressplatte ist im Kupplungsgehäuse, insbesondere innerhalb des Kupplungsdeckels, drehfest gelagert und in axialer Richtung A begrenzt verlagerbar. Insbesondere ist die Anpressplatte mittels mehrerer nicht dargestellter Blattfedern drehfest im Kupplungsgehäuse befestigt und von der Gegendruckplatte weg vorgespannt.

Darüber hinaus weist die Kupplung 2 ein Hebelelement 3 auf, das für eine normal-eingerückte Kupplung 2 als Tellerfeder und für eine normal-ausgerückte Kupplung 2 als Hebelfeder ausgebildet sein kann. Das Hebelelement 3 ist gehäuseseitig abgestützt und durch die Betätigungsvorrichtung 1 betätigbar. Die gehäuseseitige Abstützung kann beispielsweise durch eine am Kupplungsdeckel befestigte, nicht dargestellte Lagereinheit erfolgen, durch die das Hebelelement 3 verkippbar aufgehängt ist. Hierzu weist die Lagereinheit beispielsweise zwei in axialer Richtung A beabstandete Drahtringe auf, zwischen denen das Hebelelement 3 sich in radialer Richtung R der Kupplung 2 erstreckt. Über Hebelspitzen, die in radialer Richtung R auf der Innenseite des vorzugsweise im Wesentlichen ringförmig ausgebildeten Hebelelements 3 angeordnet sind, ist das Hebelelement 3 durch die Betätigungsvorrichtung 1 betätigbar.

Bei einer normal-eingerückten Kupplung 2 überwiegt die wirksame Kraft des als Tellerfeder ausgebildeten Hebelelements 3 die Gegenkraft der Blattfedern, während bei einer normal-ausgerückten Kupplung 2 die Gegenkraft der Blattfedern die wirksame Kraft des als Hebelfeder ausgebildeten Hebelelements 3 überwiegt. Dementsprechend führt eine Betätigung der Tellerfeder der normal-eingerückten Kupplung 2 durch die Betätigungsvorrichtung 1 zum Ausrücken der Kupplung 2 durch Verkippen bzw. Umschnappen der Tellerfeder, das heißt zum Abhub der Anpressplatte und zur Entfernung der Anpressplatte von der Gegendruckplatte, während eine Betätigung der Hebelfeder bei einer normal-ausgerückten Kupplung 2 durch die Betätigungsvorrichtung 1 zum Einrücken der Kupplung 2 durch Verkippen der Hebelfeder führt.

Bei eingerückter Kupplung 2 wird ein Drehmoment von der Eingangsseite der Kupplung 2, beispielsweise von einem Zweimassenschwungrad, über das Kupplungsgehäuse und sowohl die Gegendruckplatte als auch die Anpressplatte, die beide mit dem Kupplungsgehäuse, insbesondere dem Kupplungsdeckel, drehfest verbunden sind, reibschlüssig auf die Kupplungsscheibe übertragen. Von der Kupplungsscheibe, die reibschlüssig zwischen der Gegendruckplatte und der Anpressplatte geklemmt ist, wird das Drehmoment zur Ausgangsseite der Kupplung 2 übertragen, beispielsweise zu einer Eingangswelle eines Getriebes.

Da aufgrund des Reibschlusses sowohl die Reibbeläge der Kupplungsscheibe, als auch in geringerem Maße die Reibflächen der Gegendruckplatte und der Anpressplatte einem Verschleiß unterworfen sind, muss über die Lebensdauer der Kupplung 2 die Anpressplatte immer näher an die Gegendruckplatte heranbewegt werden, um die Abnahme der Dicke der Reibbeläge und der Stärke der Reibflächen in axialer Richtung A zu kompensieren und den Reibschluss herstellen bzw. die Kupplung 2 einrücken zu können. Hierzu ist in der Kupplung 2 beispielsweise eine nicht dargestellte, kraftbasierte oder wegbasierte Verschleißnachstelleinrichtung vorgesehen.

Die Betätigungsvorrichtung 1, die auf das Hebelelement 3 der Kupplung 2 wirkt, weist eine Statoreinrichtung 4 und eine bezüglich der Statoreinrichtung 4 verdrehbare Rotoreinrichtung 6 auf. Beispielsweise kann die Statoreinrichtung 4 drehfest mit einem Trägerabschnitt, insbesondere mit einem Gehäuseträger, ausgebildet sein. Vorzugsweise bilden die Statoreinrichtung 4 und die Rotoreinrichtung 6 einen Elektromotor, insbesondere einen Drehstrommotor. Hierzu ist die Statoreinrichtung 4 mit einer Stromzufuhr 5 versehen, um in nicht dargestellten, statorseitigen Spulen ein wechselndes elektromagnetisches Feld zu erzeugen. Die Rotoreinrichtung 6 weist zur magnetischen Wechselwirkung mit den statorseitigen Elektromagneten Magnete 7, genauer gesagt Permanentmagnete, auf.

Vorzugsweise ist der Elektromotor als sogenannter Außenläufer ausgebildet, das heißt die Statoreinrichtung 4 ist in radialer Richtung R der Betätigungsvorrichtung 1 bzw. der Kupplung 2 innerhalb der Rotoreinrichtung 6 angeordnet. Es ist jedoch auch möglich, den Elektromotor als Innenläufer auszubilden, das heißt die Statoreinrichtung 4 in radialer Richtung R außerhalb der Rotoreinrichtung 6 anzuordnen.

Die in Figur 1 dargestellte Rotoreinrichtung 6 weist ein Joch 8auf, das auf Seiten der Kupplung 2, das heißt mit Bezug auf Figur 1 auf der rechten Seite, in radialer Richtung R durch ein Stützlager 9 abgestützt ist. Somit ist im dargestellten Ausführungsbeispiel das Stützlager 9 in axialer Richtung A der Betätigungsvorrichtung 1 bzw. der Kupplung 2 auf der entgegengesetzten Seite der Stromzufuhr 5 für die Statoreinrichtung 4 angeordnet. Das Stützlager 9 kann mittelbar oder unmittelbar mit der Statoreinrichtung 4 verbunden sein. Das Stützlager 9 ist vorzugsweise als Wälzlager, insbesondere als Kugellager, vorzugsweise wie dargestellt als Doppelkugellager, ausgebildet. Jedoch ist auch ein Nadellager oder ein Gleitlager möglich.

Zusätzlich zur Statoreinrichtung 4 und zur Rotoreinrichtung 6 weist die Betätigungsvorrichtung 1 eine bezüglich der Rotoreinrichtung 6 in axialer Richtung A begrenzt verlagerbare Schlitteneinrichtung 10 auf. Die Schlitteneinrichtung 10 ist in radialer Richtung R außerhalb der Rotoreinrichtung 6 angeordnet. Die Schlitteneinrichtung 10 weist eine Außenhülse 11 auf, die auf Seiten der Stromzufuhr 5 für die Statoreinrichtung 4, das heißt mit Bezug auf Figur 1 auf der linken Seite, durch einen Deckel 12 abgeschlossen ist. In axialer Richtung A zwischen der Außenhülse 11 und dem Deckel 12 ist eine Ausgleichsscheibe 13 angeordnet, um die axiale Länge des durch die Außenhülse 11 und den Deckel 12 begrenzten Bauraums für eine Formfeder 25 eines Wälzkörpergewindetriebs 22, auf den nachfolgend noch eingegangen wird, zu definieren und einzustellen. Mittels mehrerer in Umfangsrichtung U der Betätigungsvorrichtung 1 bzw. der Kupplung 2 angeordneter Schrauben 14 ist der Deckel 12 durch die Ausgleichsscheibe 13 hindurch mit der Außenhülse 11 verschraubt.

In axialer Richtung A auf beiden Seiten der Schlitteneinrichtung 10 ist jeweils eine Kippmomentabstützeinrichtung 15, 16 zur Abstützung eines auf die Schlitteneinrichtung 10 wirkenden Kippmoments vorgesehen. Von den beiden Kippmomentabstützeinrichtungen 15, 16 ist eine erste Kippmomentabstützeinrichtung 15 im Bereich eines ersten Endes der Schlitteneinrichtung 10, mit Bezug auf Figur 1 auf der linken Seite, angeordnet. Eine zweite Kippmomentabstützeinrichtung 16 ist im Bereich eines zweiten, dem ersten Ende in axialer Richtung A gegenüberliegenden Endes angeordnet, das heißt mit Bezug auf Figur 1 auf der rechten Seite der Schlitteneinrichtung 10. Die erste Kippmomentabstützeinrichtung 15 weist einen ersten Ring 17 und eine erste Innenhülse 19 auf, wobei sich im dargestellten Ausführungsbeispiel ein Innenumfang des ersten Rings 17 in gleitbeweglicher Anlage mit einem Außenumfang der ersten Innenhülse 19 befindet. Gleichermaßen weist die zweite Kippmomentabstützeinrichtung 16 einen zweiten Ring 18 und eine zweite Innenhülse 20 auf, wobei sich im dargestellten Ausführungsbeispiel ein Innenumfang des zweiten Rings 18 in gleitbeweglicher Anlage mit einem Außenumfang der zweiten Innenhülse 20 befindet.

Die Innenhülsen 19, 20 weisen einen geringeren Durchmesser als die Außenhülse 11 der Schlitteneinrichtung 10 auf. Insbesondere erstrecken sich beide Innenhülsen 19, 20 in axialer Richtung A zumindest teilweise innerhalb der Außenhülse 11 der Schlitteneinrichtung 10. Die Innenhülsen 19, 20 sind mittelbar oder unmittelbar an der Statoreinrichtung 4 befestigt. Die Ringe 17, 18 sind mittelbar oder unmittelbar an der Schlitteneinrichtung 10 befestigt. Beispielsweise ist der erste Ring 17 in den Deckel 12 der Schlitteneinrichtung 10 eingepresst, während der zweite Ring 18 in die Außenhülse 11 der Schlitteneinrichtung 10 eingepresst ist. Vorzugsweise tritt zwischen den Ringen 17, 18 und den entsprechenden Innenhülsen 19, 20 im Betrieb der Betätigungsvorrichtung 1 keine Relativdrehzahl auf, da vorzugsweise die Schlitteneinrichtung 10 drehfest bezüglich der Statoreinrichtung 4 festgelegt ist. Somit befinden sich vorzugsweise die Ringe 17, 18 nur in axialer Richtung A in gleitbeweglicher Anlage mit den entsprechenden Innenhülsen 19, 20.

Jeder der beiden Ringe 17, 18 weist einen blockförmigen Querschnitt auf. Jeder der beiden Ringe 17, 18 ist aus einem starren Material ausgebildet. Alternativ oder zusätzlich ist jeder der beiden Ringe 17, 18 aus einem druckstabilen Material ausgebildet.

Die beiden Ringe 17, 18 sind vorzugsweise aus einem Kunststoff, insbesondere vorzugsweise aus Polytetrafluorethylen (PTFE) ausgebildet. Es ist jedoch auch möglich, dass die beiden Ringe 17, 18 aus einem anderen Material ausgebildet sind, das eine Beschichtung mit reibungsvermindernden Eigenschaften aufweist. Beispielsweise kann es sich bei dieser Beschichtung um eine Beschichtung aus Polytetrafluorethylen (PTFE) handeln. Ebenfalls ist es möglich, dass die beiden Ringe 17, 18 aus einem Sinterwerkstoff ausgebildet sind. Hierbei ist es insbesondere von Vorteil, wenn im Sinterwerkstoff ein Schmierstoff eingelagert ist.

Gemäß einem weiteren, nicht dargestellten Ausführungsbeispiel ist es möglich, dass sich der erste Ring 17 mit der ersten Innenhülse 19 in rollbeweglicher Anlage befindet, während der zweite Ring 18 sich mit der zweiten Innenhülse 20 in rollbeweglicher Anlage befindet. Insbesondere kann es sich bei der rollbeweglichen Anlage um eine ausschließlich in axialer Richtung A rollbewegliche Anlage handeln. Beispielsweise weisen hierzu die Ringe 17, 18 Wälzlager auf.

Die beiden in axialer Richtung A gegenüberliegenden Kippmomentabstützeinrichtungen 15, 16 begrenzen einen Fettraum 29, in dem ein zum Wälzkörpergewindetrieb 22 gehöriger Wälzkörperumlauf 23, auf den nachfolgend noch eingegangen wird, angeordnet ist. Vorzugsweise ist im Fettraum 29 auch die Formfeder 25 angeordnet. Dementsprechend übernehmen in einem besonders bevorzugten Ausführungsbeispiel die beiden Kippmomentabstützeinrichtungen 15, 16 auch die Funktionen von Dichtungen zur Abdichtung des Fettraums 29 nach außen.

In radialer Richtung R außerhalb der Außenhülse 11 ist ein Ausrücklager 21 vorgesehen. Das Ausrücklager 21 ist im dargestellten Ausführungsbeispiel als Schrägkugellager ausgebildet, kann beispielsweise jedoch auch als Kegelrollenlager, Nadellager oder Gleitlager ausgebildet sein. Über das Ausrücklager 21 und/oder die Außenhülse 11 wirkt die Schlitteneinrichtung 10 mittelbar oder unmittelbar auf die in radialer Richtung R innen liegenden Zungen des Hebelelements 3, um die Kupplung 2 auszurücken bzw. einzurücken.

Der Wälzkörpergewindetrieb 22 ist vorzugsweise in radialer Richtung R zwischen der Rotoreinrichtung 6 und der Schlitteneinrichtung 10 angeordnet. Im dargestellten Ausführungsbeispiel umfasst die Formfeder 25 des Wälzkörpergewindetriebs 22 zwölf Windungen, wobei prinzipiell jede Windungszahl größer/gleich 3 möglich ist.

Zusätzlich zur Formfeder 25 weist der Wälzkörpergewindetrieb 22 den bereits zuvor erwähnten Wälzkörperumlauf 23 auf, in dem, vorzugsweise über den gesamten Umfang verteilt, Wälzkörper 24 in einer Reihe, oder gegebenenfalls auch in mehreren, in axialer Richtung A voneinander beabstandeten Reihen, angeordnet sind. Der Wälzkörperumlauf 23 ist insbesondere rinnen- oder rillenförmig ausgebildet, und kann einerseits als separates Bauteil mit der Rotoreinrichtung 6, insbesondere mit dem Joch 8, verbunden sein, kann aber auch einteilig mit der Rotoreinrichtung 6 bzw. dem Joch 8 ausgebildet sein, wie dies in Figur 1 dargestellt ist. Insbesondere ist der Wälzkörperumlauf 23 im Außenumfang der Rotoreinrichtung 6 bzw. des Jochs 8 ausgebildet, während der Antrieb der Betätigungsvorrichtung 1 mittels eines Außenläufers erfolgt. Wenn der Antrieb der Betätigungsvorrichtung 1 mittels eines Innenläufers erfolgt, ist es umgekehrt von Vorteil, wenn der Wälzkörperumlauf 23 im Innenumfang der Rotoreinrichtung 6 bzw. des Jochs 8 angeordnet ist.

Die Wälzkörper 24 laufen im Fettraum 29, der durch die zusätzlich als Dichtung wirkenden Kippmomentabstützeinrichtungen 15, 16 in axialer Richtung A abgedichtet ist, und sind vorzugsweise als Kugeln ausgebildet. Jedoch ist es auch möglich, dass die Wälzkörper 24 als Nadeln ausgebildet sind, bzw. eine Tonnen- oder Fassform aufweisen. Der Außenkontur der Wälzkörper 24 entsprechend weist die Formfeder 25 eine Anlagekontur 27 auf, an der Oberflächenbereiche der Wälzkörper 24 anliegen. Dabei entspricht die besagte Anlagekontur 27 im Wesentlichen dem entsprechenden Oberflächenbereich des bzw. der Wälzkörper 24. Im dargestellten Ausführungsbeispiel weisen die Windungen der Formfeder 25 zwei in axialer Richtung A voneinander beabstandete Anlagekonturen 27 auf, die durch einen dazwischen liegenden Kamm 28 voneinander getrennt sind.

Die Formfeder 25 ist als innenkonturierte Formfeder 25 ausgebildet, da die Wälzkörper 24 in radialer Richtung R innerhalb der Formfeder 25 laufen. Umgekehrt ist es jedoch auch möglich, dass die Formfeder 25 bei Verwendung eines Innenläufers als außenkonturierte Formfeder 25 ausgebildet ist.

Der Wälzkörperumlauf 23 weist einen derart ausgebildeten Spurwechselbereich 30 auf, dass die Wälzkörper 24 in Umfangsrichtung U vor dem Spurwechselbereich 30 in einem Tragbereich 31 des Wälzkörperumlaufs 23 und in axialer Richtung A zwischen einer ersten und einer zweiten Windung 26a, 26b der Formfeder 25 laufen, und die Wälzkörper 24 in Umfangsrichtung U nach dem Spurwechselbereich 30 im Tragbereich 31 des Wälzkörperumlaufs 23 und in axialer Richtung A zwischen der zweiten und einer dritten Windung 26b, 26c der Formfeder 25 laufen. Zwischen der ersten und zweiten Windung 26a, 26b der Formfeder 25 ist somit eine erste Spur für die Wälzkörper 24 in Umfangsrichtung U definiert, während zwischen der zweiten und dritten Windung 26b, 26c der Formfeder 25 eine zweite Spur für die Wälzkörper 24 in Umfangsrichtung U definiert ist. An dieser Stelle sei darauf hingewiesen, dass die erste Windung 26a, die zweite Windung 26b und die dritte Windung 26c drei aufeinander folgende Windungen der Formfeder 25 darstellen, die in axialer Richtung A an beliebiger Stelle der Formfeder 25 ausgebildet sein können.

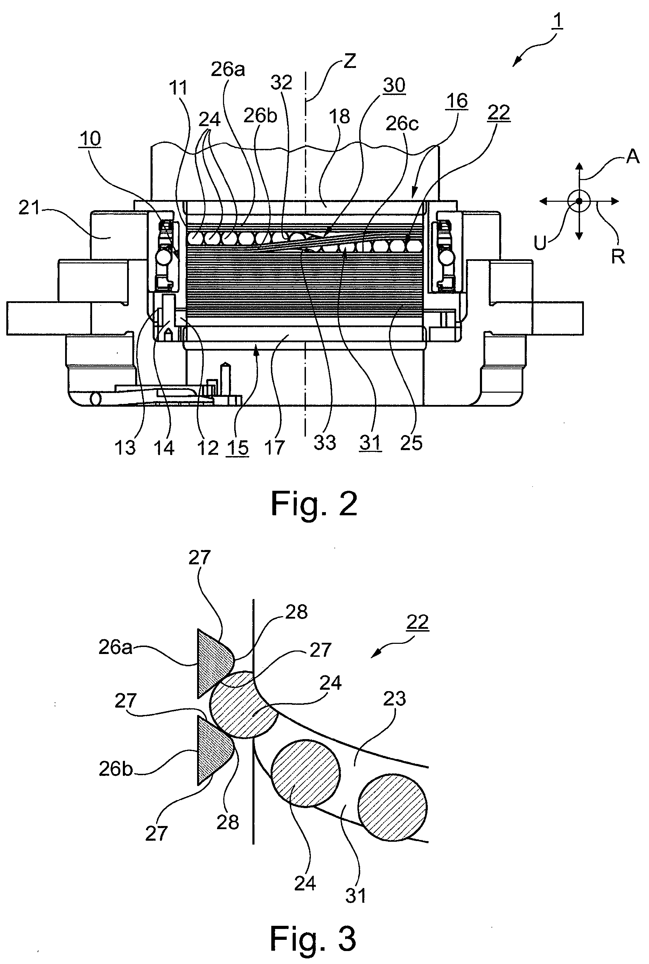

Wie dies in Figur 2 dargestellt ist, überkreuzt sich die zweite Windung 26b mit dem Spurwechselbereich 30, wenn man die Betätigungsvorrichtung 1 von der Seite betrachtet. Der Spurwechselbereich 30 weist in radialer Richtung R eine größere Tiefe als der Tragbereich 31 auf. Der Tragbereich 31 geht über einen Einlaufabschnitt 32 in den Spurwechselbereich 30 über und der Spurwechselbereich 30 geht über einen Auslaufabschnitt 33 in den Tragbereich 31 über. Die Tiefe des Wälzkörperumlaufs 23 in radialer Richtung R vergrößert sich im Einlaufabschnitt 32 vom Tragbereich 31 zum Spurwechselbereich 30 kontinuierlich. Die Tiefe des Wälzkörperumlaufs 23 in radialer Richtung R verringert sich im Auslaufabschnitt 33 vom Spurwechselbereich 30 zum Tragbereich 31 kontinuierlich.

Der Tragbereich 31 ist im Wesentlichen schraubengewindeförmig ausgebildet. Die Steigung des Tragbereichs 31 entspricht im Wesentlichen der Steigung der Formfeder 25 in diesem Bereich, genauer gesagt der Spur zwischen der ersten und zweiten Windung 26a, 26b und zwischen der zweiten und dritten Windung 26b, 26c.

Die Wälzkörper 24 sind vorzugsweise als Kugeln ausgebildet. Der Wälzkörperumlauf 23 ist vorzugsweise als umlaufende Kugelrinne ausgebildet. Im Spurwechselbereich 30 ist dabei sicherzustellen, dass die Wälzkörper 24, das heißt die Kugeln, in radialer Richtung R unter dem Kamm 28 der zweiten Windung 26b der Formfeder 25 hindurchtauchen können, um den Spurwechsel von der einen Spur zwischen der ersten und zweiten Windung 26a, 26b zur anderen Spur zwischen der zweiten und dritten Windung 26b, 26c zu vollziehen. Hierzu ist es von Vorteil, wenn die Tiefe des Spurwechselbereichs 30 im Wesentlichen gleich dem Durchmesser der Kugeln ist. Vorzugsweise ist die Tiefe des Spurwechselbereichs 30 größer als der Durchmesser der Kugeln, damit diese vollständig in die Kugelrinne eintauchen können und den Kamm 28 der zweiten Windung 26b der Formfeder 25 mit Sicherheit nicht berühren.

Im Betrieb der Betätigungsvorrichtung 1 führt eine Drehung der Rotoreinrichtung 6 durch entsprechende Bestromung der Statoreinrichtung 4 zu einer Drehung des Wälzkörperumlaufs 23. Die Wälzkörper 24 durchlaufen innerhalb des Wälzkörpergewindetriebs 22 die Spuren zwischen der ersten und zweiten Windung 26a, 26b der Formfeder 25 und zwischen der zweiten und dritten Windung 26b, 26c der Formfeder 25, wodurch sich die Spuren in axialer Richtung A bewegen, und die rotatorische Bewegung der Rotoreinrichtung 6 in eine translatorische Bewegung der Schlitteneinrichtung 10, in der die Formfeder 25 axialfest gelagert ist, umgesetzt wird. Die translatorische Bewegung der Schlitteneinrichtung 10 kann zur mittelbaren oder unmittelbaren Betätigung der Kupplung 2 verwendet werden.

Da der Wälzkörpergewindetrieb 22 vorzugsweise selbsthemmend ausgebildet ist, ist eine Bestromung der Statoreinrichtung 4 vorzugsweise lediglich erforderlich, wenn der Betriebszustand der Kupplung 2 zu ändern ist. Die Bestromung kann in beide Drehrichtungen der Rotoreinrichtung 6 erfolgen, wobei in einer Drehrichtung die Kupplung 2 eingerückt wird, und in der entgegengesetzten Drehrichtung die Kupplung 2 ausgerückt wird. Bei einer mitdrehenden Statoreinrichtung 4 sind jedoch auch andere Arten der Bestromung möglich.

Ein Vorlastpunkt der Betätigungsvorrichtung 1 wird derart festgelegt, dass das Ausrücklager 21 der Schlitteneinrichtung 10 bei Drehung der Kupplung 2 eine minimale Anpresskraft auf das Hebelelement 3 der Kupplung 2 ausübt. Die Statoreinrichtung 4 wird zur Verlagerung der Schlitteneinrichtung 10 derart bestromt, dass der Vorlastpunkt bei Drehung der Kupplung 2 nicht unterschritten wird.

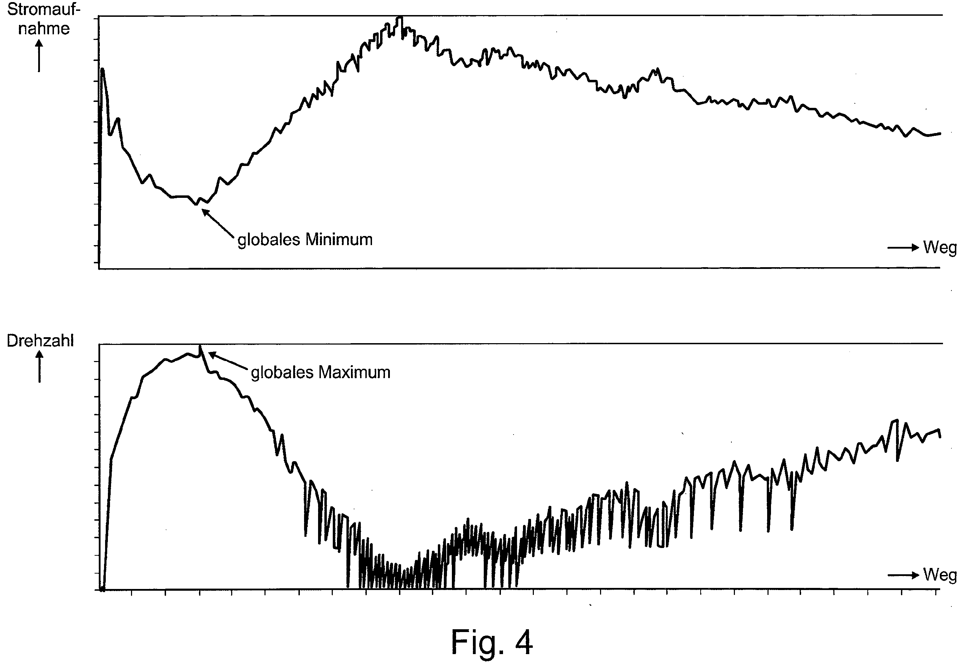

Insbesondere wird zur Bestimmung des Vorlastpunkts die Statoreinrichtung 4 derart bestromt, dass die Schlitteneinrichtung 10 in einem Bereich, in dem der Vorlastpunkt vermutet wird, in axialer Richtung A verlagert wird, und die Stromaufnahme der Statoreinrichtung 4 (Figur 4 oben) und/oder die Drehzahl der Rotoreinrichtung 6 (Figur 4 unten) und/oder die Geschwindigkeit der Schlitteneinrichtung 10 (nicht dargestellt) in diesem Bereich überwacht wird. Der Vorlastpunkt wird in einen Bereich eines globalen Minimums der Stromaufnahme und/oder eines globalen Maximums der Drehzahl und/oder eines globalen Maximums der Geschwindigkeit festgelegt.

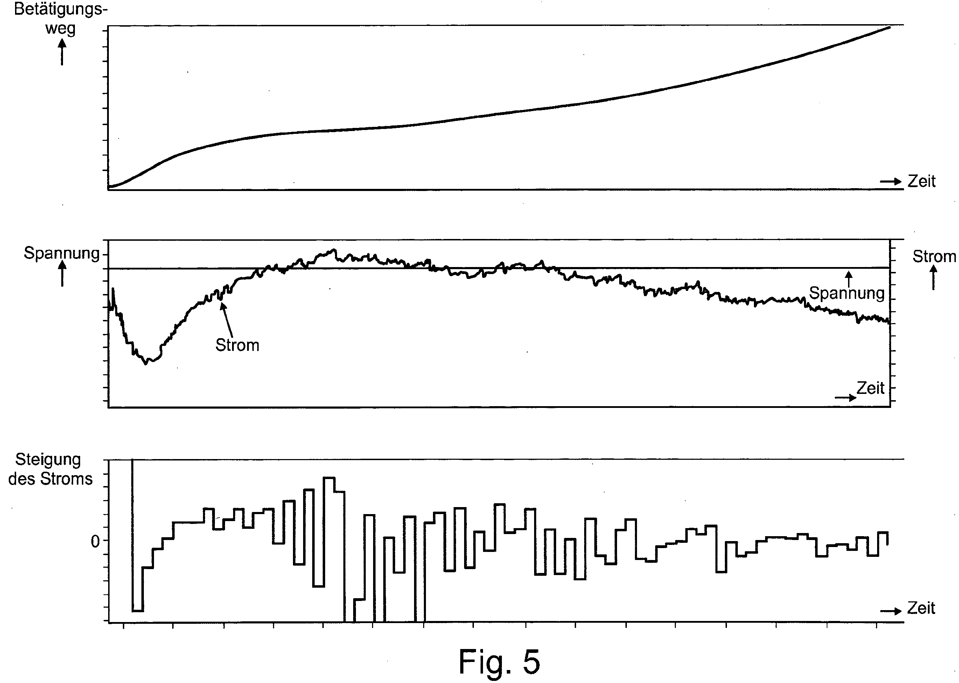

Dabei ist es von Vorteil, wenn der Vorlastpunkt mit einem vorgegebenen Abstand zu einem Bereich des betragsmäßig größten Anstiegs der Stromaufnahme und/oder des betragsmäßig größten Anstiegs der Drehzahl und/oder des betragsmäßig größten Anstiegs der Geschwindigkeit festgelegt wird. Der Anstieg der Stromaufnahme und/oder der Drehzahl und/oder der Geschwindigkeit über den Weg, den die Schlitteneinrichtung 10 in axialer Richtung A zurücklegt, bestimmt wird (vgl. Figur 5 unten).

Der Vorlastpunkt wird während des Betriebs der Betätigungsvorrichtung 1 mehrmals bestimmt. Ein neuer Vorlastpunkt darf von einem zuvor bestimmten Vorlastpunkt nur eine fest eingestellte Maximalstrecke entfernt sein. Andernfalls wird der neue Vorlastpunkt als unzulässig verworfen. Vorzugsweise wird der Vorlastpunkt zur Anpassung einer Drehmoment-Weg-Kennlinie der Betätigungsvorrichtung 1 und/oder der Kupplung 2 genutzt.

Die Adaption des Vorlastpunkts durch eine Steuersoftware der Betätigungsvorrichtung 1 ist so durchzuführen, dass die zur Verfügung stehende Momentenkapazität durch die Kupplung 2 möglichst vollständig ausgeschöpft werden kann. Eine Verschiebung des Vorlastpunkts geht mit einer Verschiebung der gesamten Lastkennlinie, und somit der Drehmoment-Weg-Kennlinie der Kupplung 2 einher. Die durch die Adaption gefundene Verschiebung kann somit auch in die Adaption einer in der Software hinterlegten Kraft-Weg-Kennlinie der Kupplung 2 zurückgeführt werden (Tastpunkt-Verschiebung).

Bei der Adaption überfährt die Schlitteneinrichtung 10 einen bestimmten Bereich, in dem der Vorlastpunkt vermutet wird, in positiver und negativer Richtung. Dabei liegt an der Betätigungsvorrichtung 1 eine konstante Spannung an, während beispielsweise die Stromaufnahme oder die Geschwindigkeit überwacht wird. Der Kontaktpunkt des Ausrücklagers 21 mit dem Hebelelement 3 der Kupplung 2 ist als Knick in der gefundenen Strom-Weg- bzw. Geschwindigkeit-Weg-Kennlinie zu erkennen. Der Knick wird softwareseitig durch Auswertung der aktuellen Steigung des gemessenen Stroms über dem zurückgelegten Weg bestimmt. Der Vorlastpunkt wird mit einem festen Abstand zur betragsmäßig maximalen Steigung des Stroms als Funktion des Wegs bzw. der Geschwindigkeit als Funktion des Wegs festgelegt. Alternativ kann neben den Maximalwerten auch das erste Überschreiten einer zuvor festgelegten Steigungsschwelle als Referenzpunkt für den Vorlastpunkt herangezogen werden.

Die Plausibilität des gefundenen Vorlastpunkts erfolgt dadurch, dass sich der Vorlastpunkt nur um einen maximale Strecke geändert haben darf. Der gefundene Vorlastpunkt kann anschließend auch für die Adaption der Moment-Weg-Kennlinie genutzt werden.

Die vorangegangenen Ausführungsbeispiele betreffen ein Verfahren zum Betrieb einer Betätigungsvorrichtung 1 für eine Kupplung 2 mit einer Statoreinrichtung 4, einer bezüglich der Statoreinrichtung 4 verdrehbaren Rotoreinrichtung 6 und einer bezüglich der Rotoreinrichtung 6 in axialer Richtung A begrenzt verlagerbaren Schlitteneinrichtung 10 mit einem Ausrücklager 21, das mit einem Hebelelement 3 der Kupplung 2 in Anlage bringbar ist, wobei ein Vorlastpunkt derart festgelegt wird, dass das Ausrücklager 21 der Schlitteneinrichtung 10 bei Drehung der Kupplung 2 eine minimale Anpresskraft auf das Hebelelement 3 der Kupplung 2 ausübt, und wobei die Statoreinrichtung 4 zur Verlagerung der Schlitteneinrichtung 10 derart bestromt wird, dass der Vorlastpunkt bei Drehung der Kupplung 2 nicht unterschritten wird. Insbesondere weist die Betätigungsvorrichtung 1 einen Wälzkörpergewindetrieb 22, der zwischen der Rotoreinrichtung 6 und der Schlitteneinrichtung 10 angeordnet ist, mit zumindest drei Windungen 26a, 26b, 26c und einem Wälzkörperumlauf 23 mit Wälzkörpern 24 auf, wobei der Wälzkörperumlauf 23 einen derart ausgebildeten Spurwechselbereich 30 aufweist, dass Wälzkörper 24 in Umfangsrichtung U vor dem Spurwechselbereich 30 zwischen einer ersten und einer zweiten Windung 26a, 26b laufen, und Wälzkörper 24 in Umfangsrichtung U nach dem Spurwechselbereich 30 zwischen der zweiten und einer dritten Windung 26b, 26c laufen.

## Patentansprüche

1. Verfahren zum Betrieb einer Betätigungsvorrichtung (1) für eine Kupplung (2) mit einer Statoreinrichtung (4), einer bezüglich der Statoreinrichtung (4) verdrehbaren Rotoreinrichtung (6) und einer bezüglich der Rotoreinrichtung (6) in axialer Richtung (A) begrenzt verlagerbaren Schlitteneinrichtung (10) mit einem Ausrücklager (21), das mit einem Hebelelement (3) der Kupplung (2) in Anlage bringbar ist, wobei ein Vorlastpunkt derart festgelegt wird, dass das Ausrücklager (21) der Schlitteneinrichtung (10) bei Drehung der Kupplung (2) eine minimale Anpresskraft auf das Hebelelement (3) der Kupplung (2) ausübt, und wobei die Statoreinrichtung (4) zur Verlagerung der Schlitteneinrichtung (10) derart bestromt wird, dass der Vorlastpunkt bei Drehung der Kupplung (2) nicht unterschritten wird, wobei zur Bestimmung des Vorlastpunkts die Statoreinrichtung (4) derart bestromt wird, dass die Schlitteneinrichtung (10) in einem Bereich, in dem der Vorlastpunkt vermutet wird, in axialer Richtung (A) verlagert wird, und die Stromaufnahme der Statoreinrichtung (4) und/oder die Drehzahl der Rotoreinrichtung (6) und/oder die Geschwindigkeit der Schlitteneinrichtung (10) in diesem Bereich überwacht wird, **dadurch gekennzeichnet, dass** der Vorlastpunkt in einen Bereich eines globalen Minimums der Stromaufnahme und/oder eines globalen Maximums der Drehzahl und/oder eines globalen Maximums der Geschwindigkeit festgelegt wird.

2. Verfahren nach Anspruch 1, wobei der Vorlastpunkt mit einem vorgegebenen Abstand zu einem Bereich des betragsmäßig größten Anstiegs der Stromaufnahme und/oder des betragsmäßig größten Anstiegs der Drehzahl und/oder des betragsmäßig größten Anstiegs der Geschwindigkeit festgelegt wird.

3. Verfahren nach Anspruch 2, wobei der Anstieg der Stromaufnahme und/oder der Drehzahl und/oder der Geschwindigkeit über den Weg, den die Schlitteneinrichtung (10) in axialer Richtung (A) zurücklegt, bestimmt wird.

4. Verfahren nach zumindest einem der Ansprüche 1 bis 3, wobei der Vorlastpunkt während des Betriebs der Betätigungsvorrichtung (1) mehrmals bestimmt wird.

5. Verfahren nach Anspruch 4, wobei ein neuer Vorlastpunkt von einem zuvor bestimmten Vorlastpunkt nur eine fest eingestellte Maximalstrecke entfernt sein darf, und andernfalls als unzulässig verworfen wird.

6. Verfahren nach zumindest einem der Ansprüche 1 bis 5, wobei der Vorlastpunkt zur Anpassung einer Drehmoment-Weg-Kennlinie der Betätigungsvorrichtung (1) und/oder der Kupplung (2) genutzt wird.

## Claims

1. Method for operating an actuation device (1) for a clutch (2) having a stator apparatus (4), a rotor apparatus (6) which can be rotated with respect to the stator apparatus (4), and a carriage apparatus (10) which can be moved to a limited degree in the axial direction (A) with respect to the rotor apparatus (6) and has a disengagement bearing (21) which can be brought into abutment with a lever element (3) of the clutch (2), wherein a pre-loading point is defined in such a way that the disengagement bearing (21) of the carriage apparatus (10) exerts a minimum pressing force on the lever element (3) of the clutch (2) when the clutch (2) rotates, and wherein the stator apparatus (4) is energized to move the carriage apparatus (10) in such a way that the pre-loading point is not undershot when the clutch (2) rotates, wherein in order to determine the pre-loading point the stator apparatus (4) is energized in such a way that the carriage apparatus (10) is moved in the axial direction (A) in a region in which the pre-loading point is assumed to be, and the power drain of the stator apparatus (4) and/or the rotational speed of the rotor apparatus (6) and/or the speed of the carriage apparatus (10) is monitored in this region, **characterized in that** the pre-loading point is defined in a region of a global minimum of the power drain and/or a global maximum of the rotational speed and/or a global maximum of the speed.

2. Method according to Claim 1, wherein the pre-loading point is defined with a predefined distance with respect to a region of the largest increase in absolute terms in the power drain and/or the largest increase in absolute terms in the rotational speed and/or the largest increase in absolute terms in the speed.

3. Method according to Claim 2, wherein the increase in the power drain and/or the rotational speed and/or the speed is determined by means of the distance which the carriage apparatus (10) travels in the axial direction (A).

4. Method according to at least one of Claims 1 to 3, wherein the pre-loading point is determined repeatedly during the operation of the actuation device (1).

5. Method according to Claim 4, wherein a new pre-loading point can only be a permanently set maximum distance from a previously determined pre-loading point, and otherwise it is rejected as unacceptable.

6. Method according to at least one of Claims 1 to 5, wherein the pre-loading point is used to adapt a torque/travel characteristic curve of the actuation device (1) and/or of the clutch (2).

## Revendications

1. Procédé de mise en fonctionnement d'un dispositif d'actionnement (1) destiné à un embrayage (2) comportant un dispositif de stator (4), un dispositif de rotor (6) pouvant être mis en rotation par rapport au dispositif de stator (4) et un dispositif de chariot (10) pouvant être déplacé par rapport au dispositif de rotor (6) de manière limitée en direction axiale (A) comportant une butée de débrayage (21) qui peut être mise en prise avec un élément formant levier (3) de l'embrayage (2), dans lequel un point de précharge est fixé de manière à ce que la butée de débrayage (21) du dispositif de chariot (10) exerce une force de pression minimale sur l'élément formant levier (3) de l'embrayage (2) lors d'une rotation de l'embrayage (2), et dans lequel le dispositif de stator (4) est alimenté en courant pour déplacer le dispositif de charriot (10) de manière à ce que le point de précharge ne soit pas dépassé en sens inférieur lors d'une rotation de l'embrayage (2), dans lequel, pour déterminer le point de précharge, le dispositif de stator (4) est alimenté en courant de manière à ce que le dispositif de chariot (10) soit déplacé en direction axiale (A) dans une zone dans laquelle le point de précharge est supposé être présent et la consommation de courant du dispositif de stator (4) et/ou la vitesse de rotation du dispositif de rotor (6). et/ou la vitesse du dispositif de chariot (10) est/sont surveillée(s) dans cette zone, **caractérisé en ce que** le point de précharge est établi dans une zone d'un minimum global de la consommation de courant et/ou d'un maximum global de la vitesse de rotation et/ou d'un maximum global de la vitesse.

2. Procédé selon la revendication 1, dans lequel le point de précharge est fixé à une distance prédéterminée d'une zone d'augmentation la plus forte de la consommation de courant et/ou d'augmentation la plus forte de la vitesse de rotation et/ou d'augmentation la plus forte de la vitesse.

3. Procédé selon la revendication 2, dans lequel l'augmentation du courant et/ou de la vitesse de rotation et/ou de la vitesse est déterminée sur le trajet qui est parcouru par le dispositif de chariot (10) en direction axiale (A).

4. Procédé selon au moins l'une des revendications 1 à 3, dans lequel le point de précharge est déterminé plusieurs fois pendant le fonctionnement du dispositif d'actionnement (1).

5. Procédé selon la revendication 4, dans lequel un nouveau point de précharge ne doit être éloigné d'un point de précharge précédemment déterminé que d'une distance maximale réglée de manière fixe et est rejeté comme étant non admissible dans le cas contraire.

6. Procédé selon au moins l'une des revendications 1 à 5, dans lequel le point de précharge est utilisé pour adapter une courbe caractéristique de couple de rotation/déplacement du dispositif d'actionnement (1) et/ou de l'embrayage (2).
